# EUROPÄISCHE PATENTSCHRIFT

(11) **EP 3 172 723 B1**
(45) Veröffentlichungstag und Bekanntmachung des Hinweises auf die Patenterteilung: **15.07.2020**
(21) Anmeldenummer: 15738629.3
(22) Anmeldetag: 16.07.2015
(51) Int. Cl.: H04N 5/77, H04N 5/445, H04N 21/426, H04N 5/232, H04N 9/804, H04N 9/82, H04N 21/431, H04N 21/432, H04N 21/81

(54) **BILDVERARBEITUNGSVORRICHTUNG, MOBILES GERÄT MIT EINER BILDVERARBEITUNGSVORRICHTUNG, VERFAHREN ZUM VERARBEITEN VON BILDERN UND VERFAHREN ZUM HERSTELLEN EINES MOBILEN GERÄTES MIT EINER BILDVERARBEITUNGSVORRICHTUNG**
IMAGE PROCESSING DEVICE, MOBILE DEVICE WITH AN IMAGE PROCESSING DEVICE, METHOD FOR PROCESSING IMAGES AND METHOD FOR PRODUCING A MOBILE DEVICE WITH AN IMAGE PROCESSING DEVICE
DISPOSITIF DE TRAITEMENT D'IMAGE, APPAREIL MOBILE ÉQUIPÉ D'UN DISPOSITIF DE TRAITEMENT D'IMAGE, PROCÉDÉ DE TRAITEMENT D'IMAGES ET PROCÉDÉ DE FABRICATION D'UN APPAREIL MOBILE ÉQUIPÉ D'UN DISPOSITIF DE TRAITEMENT D'IMAGE

(30) Priorität: 24.07.2014 EP 14178384
(43) Veröffentlichungstag der Anmeldung: 31.05.2017
(73) Patentinhaber: FRAUNHOFER-GESELLSCHAFT zur Förderung der angewandten Forschung e.V., 80636 München (DE)
(72) Erfinder: AMMANN, Christian, 90425 Nürnberg (DE); THIEME, Wolfgang, 90571 Schwaig (DE); SALOMAN, Christopher, 96135 Stegaurach (DE)
(74) Vertreter: Zinkler, Franz
(86) Internationale Anmeldenummer: PCT/EP2015/066277
(87) Internationale Veröffentlichungsnummer: WO 2016/012340

(56) Entgegenhaltungen:
- US-A- 5 434 958
- US-A1- 2003 081 122
- US-A1- 2014 178 029
- US-B2- 8 577 601
- Anonymous: "iOS Camera Overlay Example Using AVCaptureSession", , 13. April 2011 (2011-04-13), XP055156835, Gefunden im Internet: URL:http://www.musicalgeometry.com/?p=1273 [gefunden am 2014-12-04]
- Hovan Yoo: "AutoGuard Blackbox - Dash Cam - Android-Apps auf Google Play", , 1. Januar 2011 (2011-01-01), XP055157811, Gefunden im Internet: URL:https://play.google.com/store/apps/det ails?id=com.hovans.autoguard&hl=de [gefunden am 2014-12-10] in der Anmeldung erwähnt

## Beschreibung

Die vorliegende Erfindung bezieht sich auf eine Bildverarbeitungsvorrichtung, ein mobiles Gerät, das eine Bildverarbeitungsvorrichtung umfasst, ein Verfahren zum Verarbeiten von Bildern, sowie ein Verfahren zum Herstellen eines mobilen Geräts, das eine Bildverarbeitungsvorrichtung umfasst. Ausführungsbeispiele beschreiben ein System zur Aufnahme bzw. Kompression eines Videosignals und parallelem Einfügen von Overlays (dt.: Überlagerungsbilddaten).

Es ist ein breites Spektrum an Kamerasystemen bekannt, die das Aufzeichnen und Übertragen von Videosignalen ermöglichen. Oft beherrschen die entsprechenden Produkte auch Kompressionsalgorithmen. Sie reduzieren den benötigten Speicherplatz und ermöglichen das Übertragen eines Videosignals bei eingeschränkter Bandbreite. Neben der Komprimierung ist es in vielen Fällen auch wünschenswert, den Datenstrom mit weiteren Elementen (sogenannten Overlays, dt.: Überlagerungsbilddaten) zu ergänzen. Hierzu gehört beispielsweise ein Logo, das Fernsehsender in die obere Bildschirmhälfte eines Videosignals einbetten können. Ein weiterer Anwendungsfall ist z.B. im Rennsport zu finden: das Bild der Helmkamera eines Fahrers wird mit einer Geschwindigkeitsanzeige oder einer Landkarte ergänzt. Daraus ergibt sich die Notwendigkeit, Verfahren zu entwickeln, die Bilddaten sowohl komprimieren als auch Overlays hinzufügen. Ein entsprechender Ansatz sollte echtzeitfähig sein, damit es im Rahmen von Live-Übertragungen nicht zu Verzögerungen oder dem Verlust von Einzelbildern kommt. Dies ist insbesondere dann problematisch, wenn große Datenmengen, wie sie beispielsweise bei HD-Videos (High Definition Videos, dt. hochauflösende Videos) entstehen, verarbeitet werden müssen. Es gibt bereits verschiedene Lösungsansätze, um dem beschriebenen Problem zu begegnen: eine Möglichkeit ist das Verwenden einer Kamera, die ein Videosignal unkomprimiert und ohne Overlays ausgibt. Es wird an eine EDV-Anlage (EDV: elektronische Datenverarbeitung) übertragen, die die entsprechenden Overlays hinzufügt und zum Abschluss einen Kompressionsalgorithmus anwendet. Ein Beispiel ist die Micro-Kamera [1]. Sie verfügt über einen HD-SDI Ausgang (HD-SDI: High Definition Serial Digital Interface, dt.: hochauflösende serielle digitale Schnittstelle), an den ein DVB-T Modulator (DVB-T: Digital Video Broadcasting - Terrestrial, dt.: digitales, terrestrisches Fernsehen) angeschlossen werden kann. Derselbe sendet die Bilddaten kabellos an einen Übertragungswagen, der sie mit entsprechenden Overlays ergänzt. Das beschriebene Verfahren ist echtzeitfähig und erfüllt somit alle gestellten Anforderungen. Problematisch ist, dass es aus mehreren Komponenten besteht. Dies erhöht Kosten, Verlustleistung und den Aufwand für einen Gesamtaufbau. Ein weiterer kritischer Aspekt ist die drahtlose Übertragung. Sie kann fehlerhaft sein und somit auch das Enkodieren der Overlays negativ beeinflussen.

Ein weiterer Ansatz ist die Nutzung einer Kamera, die ein Videosignal ohne Overlays aufzeichnet und im Anschluss in komprimierter Form auf einen Datenträger speichert. Das Ergebnis wird einer Softwarelösung übergeben, die das Schneiden und Nachbearbeiten ermöglicht. Sie dekomprimiert das Video, fügt Overlays hinzu und komprimiert es erneut. Ein Beispiel für diesen Ansatz sind Aufnahmen einer GoPro-Kamera [2] und die Weiterverarbeitung auf einem handelsüblichen Personal Computer der Firma Apple durch die Softwarelösung "IMovie". Dieses Vorgehen hat den Vorteil, dass es nicht zu Fehlern im Rahmen der drahtlosen Übertragung kommen kann. Problematisch ist jedoch die fehlende Echtzeitfähigkeit: ein Videosignal muss erst nachbearbeitet werden, bevor es Overlays enthält. Des Weiteren kann die zweifache Kompression zu Qualitätsverlusten führen.

Neben dedizierten Kameras ermöglichen Mobiltelefone das Aufzeichnen von Videos. Auch in diesem Bereich gibt es Ansätze zur Umsetzung von Overlays. Populäre Anwendungsfälle sind Unfallkameras, die z.B. Metadaten, wie Geschwindigkeit oder Geokoordinaten in ein Video einbetten. Die Applikation "Autoguard-Blackbox" [3] zeichnet komprimierte Videosignale ohne Overlays auf. Des Weiteren speichert sie Metadaten, wie Geschwindigkeit oder Beschleunigung, in textueller Form. "Autoguard-Blackbox" beinhaltet einen eigenen Player zum Abspielen der Videodaten. Er blendet in jedes Einzelbild die entsprechenden Overlays ein. Dieses Vorgehen führt zu dem folgenden Problem: es entsteht kein komprimiertes Videosignal (beispielsweise H264), das die Overlays enthält. Ein entsprechendes Video mit Overlays kann daher nur betrachtet, jedoch nicht gespeichert oder über ein Netzwerkinterface (dt.: Netzwerkschnittstelle) gesendet werden.

Ein alternativer Ansatz wird von "DailyRoads Voyager" [4] genutzt. Auch diese Anwendung nimmt ein Video in komprimierter Form und ohne Overlays auf. Das Ergebnis kann zusammen mit den dazugehörigen Metadaten an einen Server übertragen werden, den der Entwickler der Anwendung zur Verfügung stellt. Er dekomprimiert das Videomaterial und fügt in jedes Einzelbild Overlays, wie beispielsweise eine Geschwindigkeitsanzeige oder eine Landkarte, ein. Zum Abschluss wird das Video erneut komprimiert und dem Anwender zur Verfügung gestellt. Auch dieses Vorgehen hat den Nachteil, dass es nicht echtzeitfähig ist und die zweifache Komprimierung zu Qualitätsverlusten führt.

Auch die Produkte der Firma "Race Logic" [5] ermöglichen das Aufzeichnen eines Videosignals in einem PKW. Im Gegensatz zu "DailyRoads Voyager" und "Autoguard-Blackbox" handelt es sich dabei jedoch nicht um eine Software für Mobiltelefone, sondern über dedizierte Hardware. Sie besteht aus mehreren Bildsensoren, die ein analoges Videosignal erzeugen. Des Weiteren liefern zusätzliche Sensoren wie beispielsweise ein GPS-Empfänger entsprechende Metadaten. Eine CPU steuert das Gesamtsystem und fügt in die Rohdaten der Bildsensoren entsprechende Overlays ein. Das Ergebnis wird an einen Encoderbaustein übergeben, der es komprimiert und als "Standard Definition Video" auf eine SD-Karte speichert. Der Ansatz erfüllt somit alle Anforderungen und ist echtzeitfähig. Problematisch ist die fehlende Unterstützung von HD-Video. Des Weiteren entsteht durch die Partitionierung auf mehrere Komponenten (z.B. CPU, Encoderbaustein, Mikrocontroller, usw.) eine erhöhte Leistungsaufnahme. Von Nachteil ist auch, dass das System lediglich für den Einsatz in PKWs optimiert ist und nicht generisch Verwendung finden kann.

US 2003/081122 A1 zeigt ein Strafverfolgungsdatenendgerät, das eine Videoüberlagerungskarte nutzt, um eine Anzeige des Systems zu ersetzen oder zu ergänzen, indem ein Livebild oder ein abgespieltes Video des Systems mit Daten des Datenendgeräts überlagert wird.

XP055156835, "iOS Camera Overlay Example Using AVCaptureSession" (URL:http:// www.musicalgeometry.com/?p=1273), zeigt eine iPhone App, die Überlagerungsbilddaten in ein Livebild der Kamera des iPhones einbindet.

Die Anwendung "AutoGuard Blackbox" zeigt ein Aufnahmegerät für Videos, dass Videos von vor und nach einem Unfall speichert und über GPS den genauen Zustand des Autos festhalten kann. Die GPS Daten können als Überlagerungsbilddaten in das Videosignal eingefügt werden.

US 5434958 A zeigt ein Verfahren und eine Vorrichtung um ein Videobild von einem nachfolgenden Fotodruck zu erstellen, wobei das Videobild ein Motiv darstellt, in das Spezialeffekte eingefügt werden.

Der vorliegenden Erfindung liegt somit die Aufgabe zugrunde, ein verbessertes Konzept für das Einfügen von Überlagerungsbilddaten in Bilddaten zu schaffen.

Diese Aufgabe wird durch den Gegenstand der unabhängigen Patentansprüche gelöst. Erfindungsgemäße Weiterbildungen sind in den Unteransprüchen definiert.

Ausführungsbeispiele schaffen eine Bildverarbeitungsvorrichtung, die einen Graphikprozessor umfasst der Überlagerungsbilddaten in Bilddaten einzufügen kann. In einem ersten Einfügevorgang der Überlagerungsbilddaten in die Bilddaten wird ein erster prozessierter Datenstrom geschaffen, der komprimiert an einen Speicherausgang geleitet und beispielsweise auf einem Festspeicher, einem Ringpuffer oder einer Kombination aus beidem gespeichert wird. In einem zweiten Einfügevorgang werden die ursprünglichen Bilddaten mit zweiten Überlagerungsbilddaten überlagert und an einen Anzeigeausgang geleitet, um die Bilddaten mit den Überlagerungsbilddaten z.B. auf einem Monitor anzuzeigen.

Der Erfindung liegt die Erkenntnis zu Grunde, zwei unabhängige prozessierte Datenströme mit den gleichen Bilddaten, jedoch sich unterscheidenden Überlagerungsbilddaten zu schaffen, um ein effizientes Einfügen von Überlagerungsbilddaten in Bilddaten zu ermöglichen. Der erste prozessierte Datenstrom, beispielsweise ein Videosignal mit Überlagerungsbilddaten, kann somit komprimiert und im Anschluss gespeichert werden und gemäß einem Ausführungsbeispiel auch gestreamt werden. Der zweite prozessierte Datenstrom, beispielsweise das gleiche Videosignal mit zweiten Überlagerungsbilddaten, kann ferner unkomprimiert an einen Anzeigeausgang übergeben werden, und z.B. auf einem Monitor angezeigt werden. Heutige Prozessoren können diese Aufgabe in Echtzeit übernehmen, sodass sich die doppelte Verarbeitung der Bilddaten nicht spürbar auf die Verarbeitungsgeschwindigkeit auswirkt. Somit können unnötige Verarbeitungsschritte, z.B. Kompressionsschritte, die sich nachteilig auf die Qualität des Videosignals auswirken, vermieden werden.

Gemäß einem weiteren Ausführungsbeispiel können die weiteren oder zweite Überlagerungsbilddaten die ersten Überlagerungsbilddaten umfassen und weiterhin eine graphische Benutzerschnittstelle enthalten. Ein Nutzer kann so die Möglichkeit erhalten, über die graphische Benutzerschnittstelle, z.B. die Anordnung der Überlagerungsbilddaten zu verändern, so dass dieselben im ersten und im zweiten prozessierten Datenstrom verändert werden. Weiterhin ist es möglich, die gesamte Bildverarbeitungsvorrichtung über die graphische Benutzerschnittstelle zu steuern.

Gemäß einem weiteren Ausführungsbeispiel kann ein mobiles Gerät, z.B. ein Mobiltelefon oder ein tragbarer Computer geschaffen werden, das eine Bildverarbeitungsvorrichtung, einen Bildsensor, eine berührungsempfindliche Anzeigeeinrichtung, wie z.B. einen berührungsempfindlichen Bildschirm und einen Festspeicher in einem Gerät zusammenfassen kann. Der Graphikprozessor kann beispielsweise einen Bildverarbeitungsprozessor, eine Anzeigeansteuerung, einen Videocodierer und eine Graphikprozessoreinheit umfassen und als eine Ein-Chip Lösung ausgebildet sein. Weiterhin ist es möglich, die beschriebene Funktionalität des Graphikprozessors durch einen Standardgraphikprozessor zu realisieren, sodass beispielsweise Standardtreiber und Standardprogrammupdates verwendet werden können.

Gemäß einem weiteren Ausführungsbeispiel kann der Festspeicher z.B. als Ringpuffer ausgebildet sein. Dies bietet den Vorteil, dass der Festspeicher neu eintreffende Daten speichern kann, ohne das explizit Speicherplatz auf einem gefüllten Speicher geschaffen werden muss.

Bevorzugte Ausführungsbeispiele der vorliegenden Anmeldung werden nachfolgend Bezug nehmend auf die beiliegenden Zeichnungen näher erläutert. Es zeigen:
- Fig. 1: eine schematische Darstellung einer Bildverarbeitungsvorrichtung;
- Fig. 2: eine schematische Darstellung eines mobilen Geräts mit einer Bildverarbeitungsvorrichtung;
- Fig. 3: einen schematischen Ablaufplan eines Verfahrens zum Herstellen eines mobilen Geräts;
- Fig. 4: einen schematischen Ablaufplan eines Verfahrens zum Verarbeiten von Bildern;
- Fig. 5: einen schematischen Übersichtsplan einer Bildverarbeitungsvorrichtung mit Signalflüssen;
- Fig. 6: eine schematische Darstellung eines Signalflussdiagramms einer Bildverarbeitungsvorrichtung mit einem Graphikprozessor gemäß eines Ausführungsbeispiels;
- Fig. 7: die in Fig. 6 beschriebenen Signalverarbeitungsschritte anhand eines schematischen Flussdiagramms;
- Fig. 8: eine schematische Darstellung eines Einzelbildes des ersten komprimierten Datenstroms, das beispielsweise an einen Festspeicher gesendet und/oder über eine Netzwerkschnittstelle gestreamt wird; und
- Fig. 9: eine schematische Darstellung eines Einzelbildes des zweiten prozessierten Datenstroms, das auf der Anzeigeeinrichtung dargestellt wird.

In der nachfolgenden Beschreibung der Figuren werden gleiche oder gleichwirkende Elemente mit den gleichen Bezugszeichen versehen, so dass deren Beschreibung in den unterschiedlichen Ausführungsbeispielen untereinander austauschbar ist.

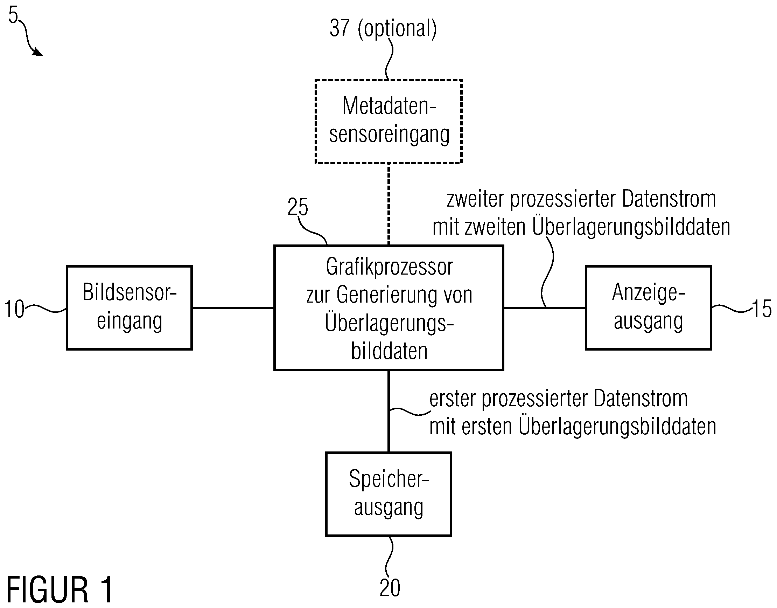

Fig. 1 zeigt eine schematische Darstellung einer Bildverarbeitungsvorrichtung 5. Die Bildverarbeitungsvorrichtung 5 umfasst einen Bildsensoreingang 10 zum Verbinden eines Bildsensors, einen Anzeigeausgang 15 zum Verbinden einer Anzeigeeinrichtung, einen Speicherausgang 20 zum Verbinden eines Festspeichers, und einen Graphikprozessor 25. Der Graphikprozessor 25 ist ausgebildet, um in Bilddaten, die über den Bildsensoreingang 10 erhaltbar sind, erste Überlagerungsbilddaten einzufügen, um einen ersten prozessierten Datenstrom 30 zu erzeugen, und um in die Bilddaten zweite Überlagerungsbilddaten, die sich von den ersten Überlagerungsbilddaten unterscheiden, einzufügen, um einen zweiten prozessierten Datenstrom 35 zu erhalten. Ferner leitet der Graphikprozessor 25 den ersten prozessierten Datenstrom 30 an den Speicherausgang 20 und den zweiten prozessierten Datenstrom 35 an den Anzeigeausgang 15. In Ausführungsbeispielen kann der Graphikprozessor 25 ausgebildet sein, dem ersten prozessierten Datenstrom 30 die ersten Überlagerungsbilddaten und dem zweiten prozessierten Datenstrom 35 die ersten und die zweiten Überlagerungsbilddaten einzufügen.

Gemäß weiterer Ausführungsbeispiele kann der Graphikprozessor 25 ausgebildet sein, um in den zweiten prozessierten Datenstrom 35 die zweiten Überlagerungsbilddaten einzufügen, die Elemente für eine graphische Benutzerschnittstelle darstellen und um eine Benutzereingabe als Reaktion auf das eine oder die mehreren Elemente für die graphische Benutzerschnittstelle zu erhalten und zu verarbeiten. Weiterhin kann durch die Benutzereingabe eine Anordnung der zweiten Überlagerungsbilddaten in dem zweiten prozessierten Datenstrom 35 verändert werden. Ferner kann der Graphikprozessor 25 ausgebildet sein, um in den ersten prozessierten Datenstrom 30 die ersten Überlagerungsbilddaten einzufügen, die das eine oder die mehreren Elemente für die graphische Benutzerschnittstelle nicht umfassen. Die graphische Benutzerschnittstelle kann ein Bildaufnahmeelement, beispielsweise einen Start/Stopp-Knopf aufweisen, die einen Bildaufnahmemodus der Bildverarbeitungsvorrichtung 5 startet.

Gemäß einem weiteren Ausführungsbeispiel kann der Graphikprozessor 25 ausgebildet sein, um durch die Benutzereingabe eine Auswahl der, in zumindest zwei Komponenten geteilten Überlagerungsbilddaten zu treffen und gemäß der Auswahl eine oder beide Komponenten der ersten Überlagerungsbilddaten in den prozessierten Datenstrom 30 einzufügen. Die graphische Benutzerschnittstelle kann daher ferner z.B. ein Auswahlelement umfassen, um durch die Benutzereingabe eine Anordnung der zweiten Überlagerungsbilddaten in dem zweiten prozessierten Datenstrom zu verändern.

Ausführungsbeispiele beschreiben ferner die Bildverarbeitungsvorrichtung 5, die optional einen Metadatensensoreingang 37 aufweisen kann, um über den Metadatensensoreingang 37 Metadaten als erste Überlagerungsbilddaten in den ersten und den zweiten prozessierten Datenstrom 30, 35 einzufügen. Optional kann der Graphikprozessor 25 ferner eine Netzwerkschnittstelle aufweisen, wobei die Netzwerkschnittstelle ausgebildet ist, Überlagerungsbilddaten derart bereitzustellen, dass dieselben in den ersten und/oder zweiten prozessierten Datenstrom 30, 35 eingefügt werden können und/oder wobei die Netzwerkschnittstelle den ersten prozessierten Datenstrom streamen kann. Weiterhin können auch ein Logo, eine Uhrzeit und/oder ein Datum als erste Überlagerungsbilddaten in den ersten und/oder den zweiten prozessierten Datenstrom eingefügt werden.

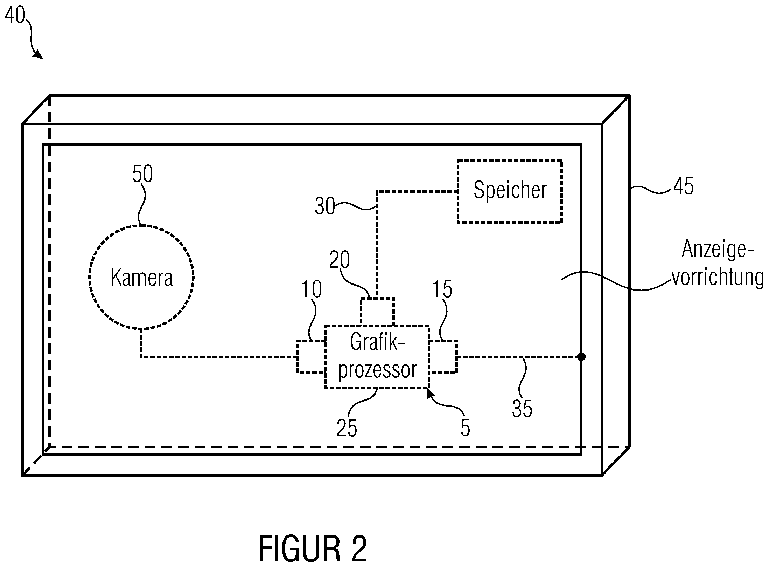

Fig. 2 zeigt eine schematische Darstellung eines mobilen Geräts 40 mit einer Bildverarbeitungsvorrichtung 5. In einem Gehäuse 45 des mobilen Geräts kann neben der Bildverarbeitungsvorrichtung 5 ein Bildsensor 50, z.B. eine Kamera eingebaut sein, wobei der Bildsensor 50 mit dem Bildsensoreingang 10 der Bildverarbeitungsvorrichtung 5 verbunden sein kann. Der Bildsensor 50 ist beispielsweise derart in dem Gehäuse 45 eingebaut, dass derselbe Bilder von der Umgebung des Gehäuses 45 aufnehmen kann. Ferner kann eine berührungsempfindliche Anzeigeeinrichtung 55, z.B. ein berührungsempfindlicher Bildschirm, mit dem Anzeigeausgang 15 der Bildverarbeitungsvorrichtung 5 verbunden und in dem Gehäuse 45 eingebaut sein. Die berührungsempfindliche Anzeigeeinrichtung kann ausgebildet sein, den zweiten prozessierten Datenstrom 35 auf einem Außenoberflächenbereich, beispielsweise einem Monitor oder einem berührungsempfindlichen Display des Gehäuses 45 anzuzeigen. Das mobile Gerät 40 kann weiterhin einen Festspeicher 60 aufweisen, der mit dem Speicherausgang 20 der Bildverarbeitungsvorrichtung 5 verbunden ist. Der Festspeicher 60 kann ausgebildet sein, den ersten prozessierten Datenstrom 30 zu speichern, wobei der Festspeicher 60 beispielsweise im Gehäuse 45 eingebaut ist. Gemäß einem Ausführungsbeispiel kann der Festspeicher 60 als Ringpuffer ausgebildet sein.

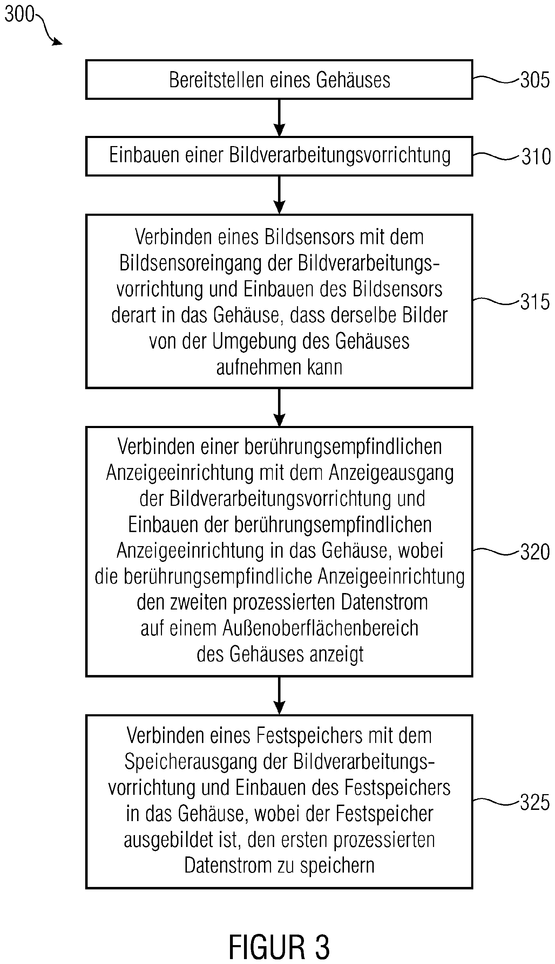

Fig. 3 zeigt einen schematischen Ablaufplan eines Verfahrens 300 zum Herstellen eines mobilen Geräts 40. Die verwendeten Bezugszeichen der Vorrichtungskomponenten beziehen sich auf Fig. 2. Das Verfahren kann einen Schritt 305 "Bereitstellen eines Gehäuses 45", einen Schritt 310 "Einbauen einer Bildverarbeitungsvorrichtung 5", einen Schritt 315 "Verwenden eines Bildsensors 50 mit dem Bildsensoreingang 10 der Bildverarbeitungsvorrichtung 5 und Einbauen des Bildsensors 50 derart in das Gehäuse 45, so dass derselbe Bilder von der Umgebung des Gehäuses 45 aufnehmen kann", einen Schritt 320 "Verbinden einer berührungsempfindlichen Anzeigeeinrichtung 55 mit dem Anzeigeausgang 15 der Bildverarbeitungsvorrichtung 5 und Einbauen der berührungsempfindlichen Anzeigeeinrichtung 55 in das Gehäuse 45, wobei die berührungsempfindliche Anzeigeeinrichtung 55 den zweiten prozessierten Datenstrom 35 auf einem Außenoberflächenbereich des Gehäuses 45 anzeigt" und einen Schritt 325 "Verbinden eines Festspeichers 60 mit dem Speicherausgang 20 der Bildverarbeitungsvorrichtung 5 und Einbauen des Festspeichers 60 in das Gehäuse 45, wobei der Festspeicher 60 ausgebildet ist, den ersten prozessierten Datenstrom 30 zu speichern" umfassen.

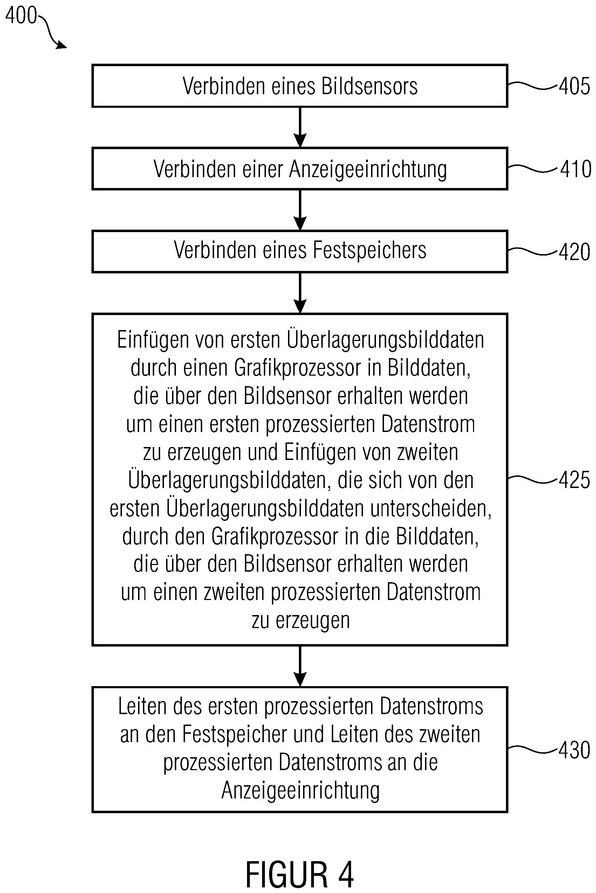

Fig. 4 zeigt einen schematischen Ablaufplan eines Verfahrens 400 zum Verarbeiten von Bildern. Das Verfahren 400 umfasst einen Schritt 405 "Verbinden eines Bildsensors", einen Schritt 410 "Verbinden einer Anzeigeeinrichtung", einen Schritt 420 "Verbinden eines Festspeichers", einen Schritt 425 "Einfügen von ersten Überlagerungsbilddaten durch einen Graphikprozessor in Bilddaten, die über den Bildsensor erhalten werden, um einen ersten prozessierten Datenstrom zu erzeugen und Einfügen von zweiten Überlagerungsbilddaten, die sich von den ersten Überlagerungsbilddaten unterscheiden, durch den Graphikprozessor in die Bilddaten, die über den Bildsensor erhalten werden, um einen zweiten prozessierten Datenstrom zu erzeugen", und eine Schritt 430 "Leiten des ersten prozessierten Datenstroms an den Festspeicher und Leiten des zweiten prozessierten Datenstroms an die Anzeigeeinrichtung".

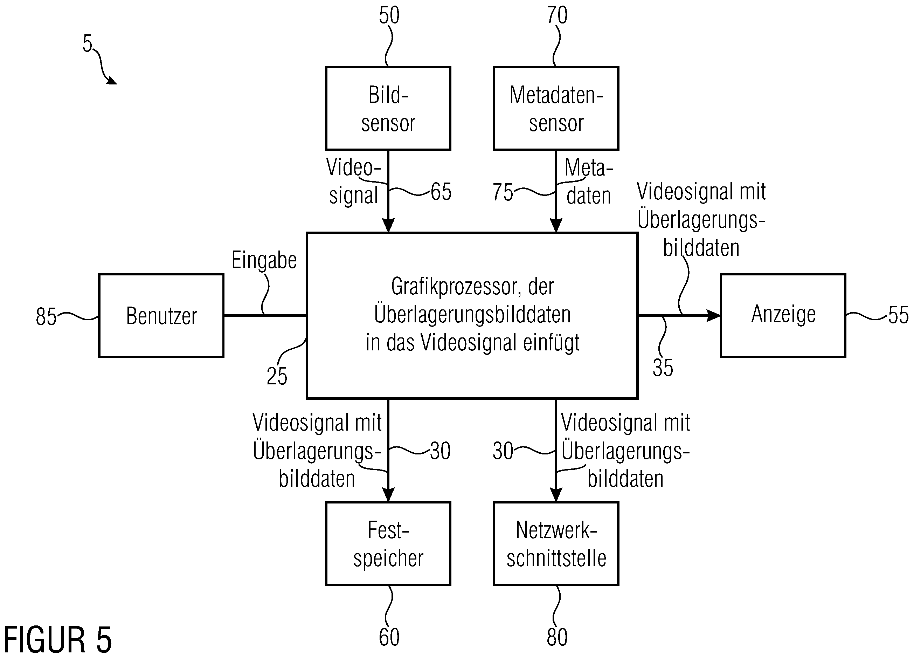

Fig. 5 zeigt einen schematischen Übersichtsplan mit Signalflüssen gemäß einem Ausführungsbeispiel. Einer oder mehrere Bildsensoren 50 können ein Bilddaten 65, z.B. eine Abfolge von unkomprimierten Einzelbildern oder ein Videosignal, liefern. Ferner kann der Graphikprozessor verschiedene Bussysteme nach außen, die z.B. Peripheriekomponenten anschließen, umfassen. Beispiele können USB (Universal Serial Bus, dt.: universelles serielles Bussystem), SPI (Serial Peripheral Interface, dt.: serielle periphere Schnittstelle) oder CAN (Controller Area Network, dt.: Steuerungsrechennetz) sein. An die Bussysteme können z.B. Metadatensensoren 70, wie z.B. GPS (Global Positioning System, dt.: Globales Positionierungssystem) oder ein Temperatursensor angeschlossen werden, die entsprechende Metadaten 75 liefern können. Der Graphikprozessor kann die Metadaten 75 in die Bilddaten 65 einfügen und als ersten prozessierten Datenstrom, z.B. als (kodiertes und/oder komprimiertes) Videosignal 77 über den Speicherausgang 20 auf dem Festspeicher 60, z.B. einem persistenten Speicher, beispielsweise einer Festplatte oder einer SD-Karte gesichert werden. Ferner kann der Graphikprozessor die Metadaten 75 sowie weitere Metadaten oder alternativ nur weitere Metadaten als zweiten prozessierten Datenstrom 35 über den Anzeigeausgang 15 beispielsweise einen Videoausgang, wie z.B. HD-SDI oder HDMI ausgegeben werden.

In einem weiteren Ausführungsbeispiel kann der erste prozessierte Datenstrom 30 bzw. das (kodierte und/oder komprimierte) Videosignal 77 auch über eine Netzwerkschnittstelle 80, z.B. WiFi, Ethernet oder Bluetooth an einen Empfänger übertragen, d.h. gestreamt werden. Ferner kann die Netzwerkschnittstelle 80 das Bereitstellen dritter Überlagerungsbilddaten ermöglichen, die in den ersten und/oder zweiten prozessierten Datenstrom 30, 35 eingefügt werden können. Weiterhin kann ein Benutzer 85 die Bildverarbeitungsvorrichtung 5 mit verschiedenen Eingabegeräten, z.B. Maus, Tastatur und/oder Touch-Gesten (dt.: Berührungsgesten) steuern.

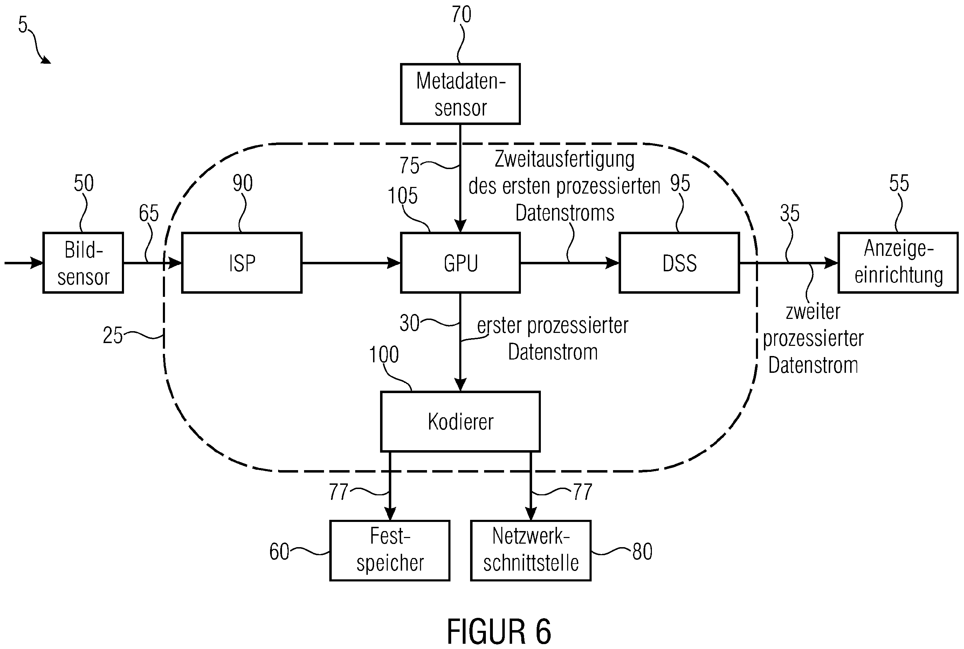

Fig. 6 zeigt eine schematische Darstellung eines Signalflussdiagramms der Bildverarbeitungsvorrichtung 5, speziell im Graphikprozessor 25. Der Graphikprozessor 25 kann einen ISP 90 (Image Signal Processor, dt.: Bildverarbeitungsprozessor), ein Display Subsystem 95 (DSS, dt.: Anzeigeansteuerung), einen "Video-Encoder" 100 (dt.: Video Codierer) und eine GPU (Graphics Processing Unit, dt.: Graphikprozessoreinheit) umfassen.

Die Bildverarbeitungsvorrichtung 5 kann, wie bereits beschrieben, in einem mobilen Gerät Anwendung finden. Der integrierte Graphikprozessor 25 kann einen Bildverarbeitungsprozessor 90 (engl.: Image Signal Prozessor, ISP), der den Bildsensoreingang 10 bereitstellt und über den Bildsensoreingang 10 mit dem Bildsensor 50 verbunden ist, aufweisen. Ferner kann der Graphikprozessor 25, der eine Anzeigeansteuerung 95 (engl.: Display Subsystem, DSS) bereitstellt und mit der berührungsempfindlichen Anzeigeeinrichtung 55 verbunden ist, sowie einen Videocodierer 100 (engl.: Video Encoder) aufweisen, der den Speicherausgang 20 bereitstellt und über den Speicherausgang 20 mit dem Festspeicher 60 verbunden ist. Weiterhin kann der Graphikprozessor 25 eine Graphikprozessoreinheit 105 (engl.: Graphical Processing Unit, GPU) aufweisen, die mit der ISP 90, dem Display Subsystem 95 und dem Videocodierer 100 verbunden ist, wobei der Graphikprozessor 25 in einem integrierten Schaltkreis auf einem Halbleitersubstrat realisiert sein kann.

Die Funktionsweise stellt sich wie folgt dar: Der eine oder mehrere Bildsensoren 50 können Bilddaten aufnehmen und leiten diese, beispielsweise in Form der Bilddaten 65 an die ISP 90 des Mobilprozessors weiter. Der ISP 90 verarbeitet die Bilddaten 65, um beispielsweise die Bildqualität durch Algorithmen, wie beispielsweise Weißabgleich zu erhöhen. Parallel dazu erzeugen Metadatensensoren 70, z.B. GPS-, Beschleunigung- oder Lagesensoren entsprechende Metadaten. Sowohl die Metadaten als auch die Einzelbilder werden von der GPU 105 entgegengenommen. Dieselbe generiert aus den Metadaten Overlaygraphiken (dt.: Überlagerungsbilddaten), beispielsweise einen Tacho, der die aktuelle Geschwindigkeit anzeigt und legt die Metadaten 75 über das jeweilige Einzelbild. Diese Rechenoperation kann zweimal ausgeführt werden. Es können zwei Videosignale entstehen, die an das "Display Subsystem" 95 und einen "Video-Encoder" 100 gesendet werden. Das "Display Subsystem" 95 kann das Videosignal 65 über eine Schnittstelle, z.B. den Anzeigeausgang 15, wie beispielsweise HD-SDI oder HDMI, ausgeben. Der Encoder 100 kann einen Kompressionsalgorithmus, wie beispielsweise H264, anwenden. Das Ergebnis kann über die Netzwerkschnittstelle 80 ausgegeben, oder über den Speicherausgang 20, beispielsweise auf einem Festspeicher 60, wie z.B. einem Datenträger oder einem Ringpuffer gespeichert werden.

Gemäß einem Ausführungsbeispiel kann der Graphikprozessor 25 mit einem Standardgraphikprozessor ausgebildet sein, der konfiguriert ist, in einem Bildaufnahmezyklus, die Bilddaten des Bildsensors 50 mittels des Bildverarbeitungsprozessors 90 einmal in jedem Bildaufnahmezyklus zu verarbeiten. Ferner kann der Graphikprozessor 25 ein erstes Einfügen der ersten Überlagerungsbilddaten in die Bilddaten 65 vornehmen, um den ersten prozessierten Datenstrom 30 zu erhalten, wobei der erste prozessierte Datenstrom 30 komprimiert in dem Festspeicher 60 abgelegt ist und/oder über eine Netzwerkschnittstelle 80 gestreamt werden kann. Nach dem Speichern und/oder Streamen des ersten prozessierten Datenstroms 30 kann ein zweites Einfügen der ersten Überlagerungsbilddaten in die Bilddaten vorgenommen werden. Ergänzend kann der Graphikprozessor die zweiten Überlagerungsbilddaten hinzufügen, um den zweiten prozessierten Datenstrom 35 zu erhalten, wobei der zweite prozessierte Datenstrom 35 unkomprimiert auf der berührungsempfindlichen Anzeigeeinrichtung 55 dargestellt werden kann. Ferner kann der Standardgraphikprozessor ausgebildet sein, um eine Nutzung von Standardsoftware zu ermöglichen. Weiterhin kann die Standardsoftware über ein standardmäßiges Update aktualisiert werden.

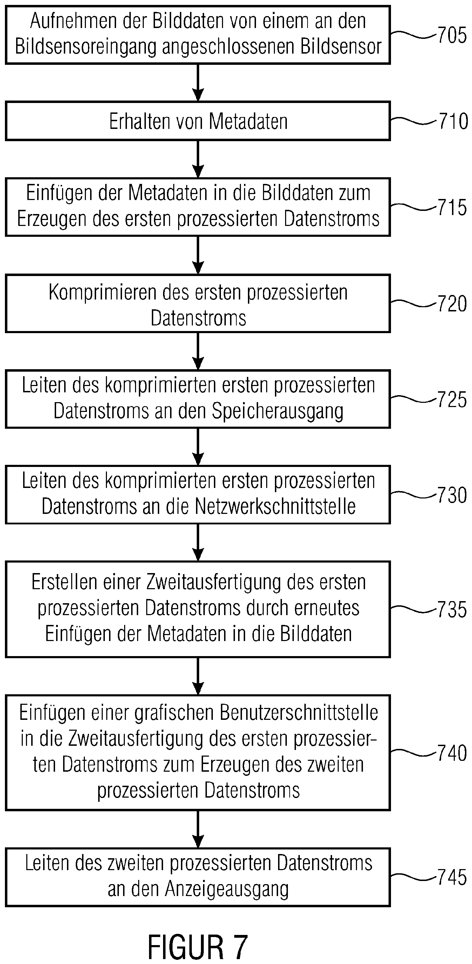

Fig. 7 zeigt die in Fig. 6 beschriebenen Signalverarbeitungsschritte anhand eines schematischen Flussdiagramms. Das Verfahren umfasst einen Schritt 705 "Aufnehmen der Bilddaten von einem an den Bildsensoreingang 10 angeschlossenen Bildsensor 50" sowie einen Schritt 710 "Erhalten von Metadaten", die beispielsweise über einen Metadatensensor, wie z.B. GPS, einen Beschleunigungssensor oder einen Geschwindigkeitssensor aufgenommen werden, oder ein weiteres Metadatensignal, wie z.B. eine Uhrzeit oder ein Datum sein können. Weiterhin umfasst das Verfahren einen Schritt 715 "Einfügen der Metadaten 75 in die Bilddaten zum Erzeugen des ersten prozessierten Datenstroms 30" und einen Schritt 720 "Komprimieren des ersten prozessierten Datenstroms" sowie einen Schritt 725 mit "Leiten des komprimierten ersten prozessierten Datenstroms an den Speicherausgang 20" und/oder einen Schritt 730 "Leiten des komprimierten ersten prozessierten Datenstroms an die Netzwerkschnittstelle 80". Ferner umfasst das Verfahren einen Schritt 735 "Erstellen einer Zweitausfertigung des ersten prozessierten Datenstroms 30 durch erneutes Einfügen der Metadaten 75 in die Bilddaten 65" sowie einen Schritt 740 "Einfügen einer graphischen Nutzerschnittstelle in die Zweitausfertigung des ersten prozessierten Datenstroms zum Erzeugen des zweiten prozessierten Datenstroms 35" und einen Schritt 745 "Leiten des zweiten prozessierten Datenstroms an den Anzeigeausgang 15".

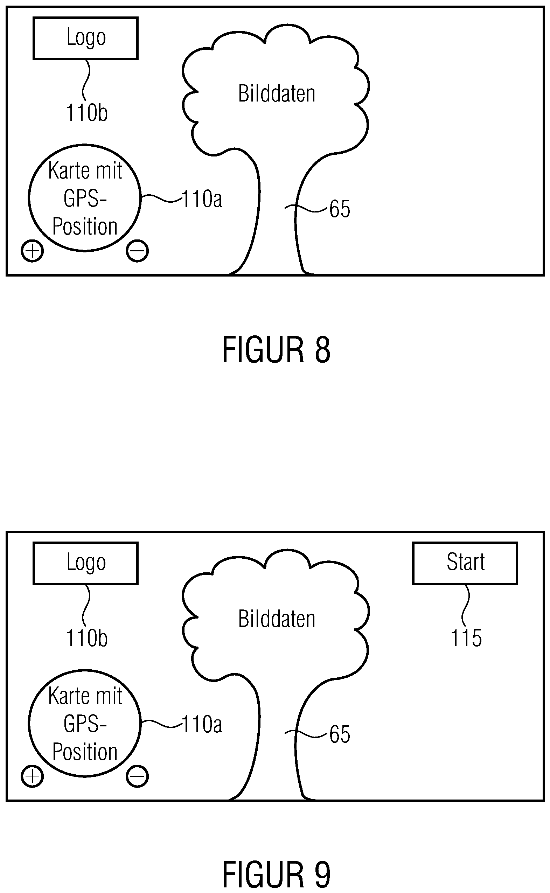

Fig. 8 zeigt eine schematische Darstellung eines Einzelbildes des ersten komprimierten Datenstroms, das beispielsweise an den Festspeicher gesendet und/oder über die Netzwerkschnittstelle gestreamt werden kann. Im Hintergrund des schematischen Bildes ist ein beispielhaftes Einzelbild der Bilddaten 65 zu sehen. Im Vordergrund können die Überlagerungsbilddaten 110a, beispielsweise eine Landkarte, die einen Kartenausschnitt um das anhand eines Signals eines GPS-Sensors bestimmte Position darstellen kann, eingeblendet werden. Die Überlagerungsbilddaten 110a weisen ferner zwei Elemente zur Skalierung des Kartenausschnitts auf. Weiterhin können die Überlagerungsbilddaten 110b, beispielsweise das Logo eines Fernsehsenders eingeblendet werden. Ergänzend oder alternativ zu den Überlagerungsbilddaten 110a und 110b können weitere Überlagerungsbilddaten wie beispielsweise eine Geschwindigkeit, eine Beschleunigung, ein Datum und/oder eine Uhrzeit in das Bilddaten 65 bzw. das Videosignal vom Bildsensor eingefügt werden.

Fig. 9 zeigt eine schematische Darstellung eines Einzelbildes des zweiten prozessierten Datenstroms, das auf der Anzeigeeinrichtung dargestellt werden kann. Es umfasst das Einzelbild des Videosignal des ersten prozessierten Datenstroms, das bereits in Fig. 8 zu sehen sind. Ferner kann jedoch die graphische Benutzerschnittstelle 115, z.B. ein Start/Stopp-Knopf zur Steuerung der Bildverarbeitungsvorrichtung eingeblendet werden. Weiterhin ist es möglich, dass die zwei Elemente zur Skalierung des Bildausschnitts der Überlagerungsbilddaten 110a vom Benutzer bedient werden können.

In anderen Worten kann die Bildverarbeitungsvorrichtung 5 ein HD-Videosignal in Echtzeit verarbeiten, speichern und ausgeben. Um diesen Aspekten gerecht werden zu können, bietet sich die Verwendung eines "System on Chips" (dt.: Ein-Chip-System) an, wie beispielsweise moderne Mobilprozessoren, die diese Aufgabenstellung bereits nativ unterstützen. Dieselben können unter anderem in Mobiltelefonen Verwendung finden und zeichnen sich durch eine geringe Leistungsaufnahme aus. Beispiele für Mobilprozessoren sind der "OMAP" von "Texas Instruments" [6], der "Snapdragon" von "Qualcomm" [7] oder der "Tegra" von "Nvidia" [8]. Auf einem entsprechenden Chip können sich eine oder mehrere CPUs (Central Processing Unit, dt.: Prozessor), eine GPU, eine ISP, ein Encoder sowie Schnittstellen zum Anschließen verschiedener Bildsensoren, wie beispielsweise CSI2 (Camera Serial Interface, dt.: serielle Kamera Schnittstelle), befinden. Die eine oder mehreren CPUs können das Gesamtsystem steuern und Programmcode ausführen. Die GPU kann das hochgradig parallelisierte Ausführen von Rechenoperationen ermöglichen, beispielsweise das Berechnen von 3D-Anwendungen mit Open GL oder das Einfügen von Überlagerungsbilddaten in Bilddaten. Die ISP kann zur Bildaufbereitung dienen, indem sie beispielsweise die Daten von Bildsensoren entgegennimmt und die Qualität beispielsweise durch einen automatischen Weißabgleich erhöht. Der Encoder, z.B. ein H264 Encoder, kann z.B. den ersten prozessierten Datenstrom komprimieren. In Kurzform beschreibt die oben genannte Erfindung ein System, das über einen oder mehrere Bildsensoren verfügt und daraus ein Videosignal erzeugen kann. Das Video kann mit sogenannten Overlays angereichert werden. Dabei handelt es sich um Graphiken, wie z.B. einem Logo oder einem Tacho. Abschließend kann eine Kompression erfolgen, um das Video zu speichern oder zu streamen.

Durch den oben beschriebenen Ansatz und die Nutzung eines Standardprozessors kann das Gesamtsystem in eine einzelne (dedizierten) Kamera wie z.B. der INCA [9] oder alternativ in ein Mobiltelefon integriert werden, das komprimieren, aufzeichnen, senden und Overlays einbetten kann. Andere Anwendungen [1] [5] teilen das Verfahren auf mehrere Komponenten auf, was Kosten, Aufwand und Leistungsaufnahme unnötig erhöht. Ferner führt auch das Verarbeiten des Videosignals und das Hinzufügen der Overlays auf einem einzelnen "System-on-Chip" zu einer sehr geringen Leistungsaufnahme.

Das oben genannte Verfahren fügt Overlays in ein Video ein und kann dieses im Anschluss komprimieren. Andere Lösungen [2] [4] sehen vor, dass ein bereits komprimiertes Video dekomprimiert werden muss um Overlays einzufügen und das dekomprimierte Video im Anschluss erneut komprimiert. Dies kann zu Qualitätsverlusten führen. Ferner ermöglicht das oben genannte Verfahren das "streamen" von Videos mit Overlays in Echtzeit über die Netzwerkschnittstelle, was mit einem nachträglichen Einfügen, beispielsweise gezeigt in [2] [4], der Overlays in das Videosignal nicht möglich ist.

Weiterhin wird das Videosignal mit Overlays zweifach generiert, um auf einem Display z.B. der berührungsempfindlichen Anzeigeeinrichtung) angezeigt und beispielsweise auf einem persistenten Speicher gesichert zu werden. Dies hat den Vorteil, dass auf dem Display GUI-Elemente (Graphical User Interface, dt.: grafische Benutzerschnittstelle) dargestellt werden können, die auf dem "gestreamten" oder persistent gesicherten Video nicht zu sehen sind. Ein konkretes Beispiel für eine grafische Benutzerschnittstelle kann ein Schalter sein, der die Aufnahme startet. Ferner kann der Benutzer die Overlays des ersten prozessierten Datenstroms und/oder die Overlays des zweiten prozessierten Datenstroms nach seinen Bedürfnissen, z.B. über Touch-Gesten, anpassen.

Weiterhin bietet die Netzwerkschnittstelle die Möglichkeit, Werbung in den komprimierten ersten prozessierten Datenstrom oder bereits vor der Komprimierung in den ersten prozessierten Datenstrom z.B. als Overlay einzufügen. Ferner bieten sich folgende, weitere Vorteile:
- Es können mehrere Bildsensoren angeschlossen werden. Die Daten können als Bild im Bild und somit als zusätzliches Overlay in den ersten und/oder zweiten prozessierten Datenstrom eingebettet werden.
- Ein Ringpuffer kann aktiviert werden, der verhindert, dass die Kapazität des persistenten Speichers nicht ausreicht
- Das "System on Chip" kann eine CPU enthalten. Es kann deshalb durch Software-Updates beliebig erweitert werden. Dies ist insbesondere dann von Bedeutung, wenn neue Overlays angezeigt oder neue Sensoren unterstützt werden sollen. Entsprechende Updates können dem System über den persistenten Speicher oder die Netzwerkschnittstelle zur Verfügung gestellt werden.
- Durch die Verwendung eines Mobilprozessors steht eine große Menge an quelloffener und freier Software, wie beispielsweise Android, zur Verfügung. Dies erleichtert den Anschluss neuer Komponenten, wie beispielsweise "USB auf Seriell-Adaptern", da ein breites Spektrum an vorgefertigten Treibern und Software-Lösungen vorhanden ist.
- Durch die Leistungsfähigkeit moderner Mobilprozessoren kann auch hochauflösendes Videomaterial (HD, 4k, etc.) in Echtzeit mit Overlays versehen, komprimiert, gespeichert und/oder gestreamt werden.
- Die GPS-Daten können mit Kartenmaterial, das sich auf dem persistenten Speicher befindet, visualisiert werden. Das Kartenmaterial kann auch über eine Internetverbindung bezogen werden. Um dem Problem von Verbindungsabbrüchen zu begegnen, ist eine Pufferung des Kartenmaterials möglich.
- Durch die Parallelisierung in der GPU können aufwendige, grafische Effekte, wie beispielsweise Transparenz, umgesetzt werden.
- Der Anwender kann das System im laufenden Betrieb beliebig konfigurieren. Dazu gehören beispielsweise die Auflösungen der Bildsensoren, die Auflösung des Encoders, die Bildwiederholungsrate der Sensoren oder die Anordnung der Elemente der grafischen Nutzerschnittstelle.
- Der Anwender kann nicht benötigte Overlays deaktivieren bzw. ausblenden.

Anwendungsbeispiele für das oben genannte Konzept können z.B. in Polizeiwagen sein, um die Geschwindigkeit verdächtiger Fahrzeuge aufzuzeichnen. Weiterhin kann das Konzept in Unfallkameras in herkömmlichen PKWs Verwendung finden, um Unfallhergang, Ort und Geschwindigkeit aufzuzeichnen. In Rennwagen, z.B. der Formel 1, kann entsprechendes Videomaterial von den Rennwagen an die Fernsehsender übermittelt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar, Einige oder alle der Verfahrensschritte können durch einen Hardware-Apparat (oder unter Verwendung eines Hardware-Apparats), wie zum Beispiel einen Mikroprozessor, einen programmierbaren Computer oder einer elektronischen Schaltung durchgeführt werden. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer BluRay Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmier-baren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### REFERENZEN

[1] "micro HDTV-Kamera". Fraunhofer-Institut für integrierte Schaltungen IIS http://www.iis.fraunhofer.de
[2] "GoPro - Be a hero". http://de.gopro.com.
[3] "AutoGuard Blackbox - Dash Cam". Hovan Yoo https://play.google.com/store/apps/details?id=com.hovans.autoguard&hl=de.
[4] "DailyRoads Voyager". Daily Roads https://play.google.com/store/apps/details?id=com.dailyroads.v&hl=de
[5] "Vbox". Racelogic http://www.vboxmotorsport.co.uk.
[6] "OMAP - Applications Processors". Texas Instruments http://www.ti.com/lsds/ti/omap-applications-processors/overview. page.
[7] "Snapdragon". Qualcomm http://www.qualcomm.com/snapdragon.
[8] "Tegra". Nvidia http://www.nvidia.com/object/tegra.html.
[9] "INCA". Fraunhofer-Institut für integrierte Schaltkreise IIS http://www.iis.fraunhofer.de

## Patentansprüche

1. Bildverarbeitungsvorrichtung (5) mit folgenden Merkmalen:
einem Bildsensoreingang (10) zum Verbinden eines Bildsensors (50);
einem Anzeigeausgang (15) zum Verbinden einer Anzeigeeinrichtung (55);
einem Speicherausgang (20) zum Verbinden eines Festspeichers (60); und
einem Graphikprozessor (25), der ausgebildet ist, um in Bilddaten (65), die über den Bildsensoreingang (10) erhaltbar sind, erste Überlagerungsbilddaten (110a,110b) einzufügen, um einen ersten prozessierten Datenstrom (30) zu erzeugen, und um in die Bilddaten (65) zweite Überlagerungsbilddaten, die sich von den ersten Überlagerungsbilddaten (110a,110b) unterscheiden, einzufügen, um einen zweiten prozessierten Datenstrom (35) zu erhalten, und um den ersten prozessierten Datenstrom (60) an den Speicherausgang (20) zu leiten und den zweiten prozessierten Datenstrom (30) an den Anzeigeausgang (15) zu leiten,
wobei der Graphikprozessor (25) ausgebildet ist, um den ersten prozessierten Datenstrom (30) und eine Zweitausfertigung des ersten prozessierten Datenstroms zu generieren;
wobei der Graphikprozessor (25) ausgebildet ist, um den ersten prozessierten Datenstrom (30) zu komprimieren und an den Speicherausgang (20) zu leiten;
wobei der Graphikprozessor (25) ausgebildet ist, um in die nicht komprimierte Zweitausfertigung des ersten prozessierten Datenstroms (30) die zweiten Überlagerungsbilddaten einzufügen, um den zweiten prozessierten Datenstrom (35) zu erzeugen; und
wobei der Graphikprozessor (25) ausgebildet ist, um den zweiten prozessierten Datenstrom (35) an den Anzeigeausgang (15) zu leiten.

2. Bildverarbeitungsvorrichtung (5) gemäß Anspruch 1,
wobei der Graphikprozessor (25) ausgebildet ist, um in den zweiten prozessierten Datenstrom (35) die zweiten Überlagerungsbilddaten einzufügen, die Elemente für eine grafische Benutzerschnittstelle (115) darstellen;
wobei der Graphikprozessor (25) ausgebildet ist, um in den ersten prozessierten Datenstrom (30) die ersten Überlagerungsbilddaten (110a,110b) einzufügen, die das eine oder die mehreren Elemente für die grafische Benutzerschnittstelle (115) nicht umfassen; und
wobei der Graphikprozessor (25) ausgebildet ist, um eine Benutzereingabe als Reaktion auf das eine oder die mehreren Elemente für die grafische Benutzerschnittstelle (115) zu erhalten und zu verarbeiten.

3. Bildverarbeitungsvorrichtung (5) gemäß einem der Ansprüche 1-2
wobei der Graphikprozessor (25) ausgebildet ist, um durch die Benutzereingabe eine Auswahl der in zumindest zwei Komponenten geteilten ersten Überlagerungsbilddaten (110a,110b) zu treffen; und
wobei der Graphikprozessor (25) ausgebildet ist, um gemäß der Auswahl eine oder beide Komponenten der ersten Überlagerungsbilddaten (110a,110b) in den ersten prozessierten Datenstrom (30) einzufügen.

4. Bildverarbeitungsvorrichtung (5) gemäß einem der Ansprüche 2 oder 3, wobei der Graphikprozessor (25) ausgebildet ist, um durch die Benutzereingabe eine Anordnung der zweiten Überlagerungsbilddaten in dem zweiten prozessierten Datenstrom (35) zu verändern.

5. Bildverarbeitungsvorrichtung (5) gemäß einem der Ansprüche 2 bis 4, wobei der Graphikprozessor (25) ausgebildet ist, um in die grafische Benutzerschnittstelle (115) ein Bildaufnahmeelement einzufügen, wobei das Bildaufnahmeelement einen Bildaufnahmemodus der Bildverarbeitungsvorrichtung startet.

6. Bildverarbeitungsvorrichtung (5) gemäß einem der vorherigen Ansprüche,
wobei die Bildverarbeitungsvorrichtung (5) einen Metadatensensoreingang (37) zum Verbinden eines Metadatensensors (70) aufweist; und
wobei der Graphikprozessor (25) ausgebildet ist, um Metadaten (75) des Metadatensensors (70) als erste Überlagerungsbilddaten (110a,110b) in den ersten und den zweiten prozessierten Datenstrom (30, 35) einzufügen.

7. Bildverarbeitungsvorrichtung (5) gemäß einem der vorherigen Ansprüche, wobei der Graphikprozessor (25) eine Netzwerkschnittstelle (80) aufweist,
wobei die Netzwerkschnittstelle (80) ausgebildet ist, um dritte Überlagerungsbilddaten bereitzustellen, die in den ersten und/oder zweiten prozessierten Datenstrom (30,35) eingefügt werden; und
wobei die Netzwerkschnittstelle (80) ausgebildet ist, um den ersten prozessierten Datenstrom (30) zu streamen.

8. Mobiles Gerät (40) mit folgenden Merkmalen:
einem Gehäuse (45);
einer Bildverarbeitungsvorrichtung (5) gemäß einem der Ansprüche 1 - 7, die in dem Gehäuse (40) eingebaut ist;
einem Bildsensor (50), der mit dem Bildsensoreingang (10) der Bildverarbeitungsvorrichtung (5) verbunden ist, wobei der Bildsensor (50) derart in dem Gehäuse (45) eingebaut ist, dass derselbe Bilder von der Umgebung des Gehäuses (45) aufnehmen kann;
einer berührungsempfindlichen Anzeigeeinrichtung (55), die mit dem Anzeigeausgang (15) der Bildverarbeitungsvorrichtung (5) verbunden und in dem Gehäuse (40) eingebaut ist und ausgebildet ist, um den zweiten prozessierten Datenstrom (35) auf einem Außenoberflächenbereich des Gehäuses (45) anzuzeigen; und
einem Festspeicher (60), der mit dem Speicherausgang (20) der Bildverarbeitungsvorrichtung (5) verbunden ist und ausgebildet ist, um den ersten prozessierten Datenstrom (30) zu speichern, wobei der Festspeicher (60) im Gehäuse (45) eingebaut ist.

9. Mobiles Gerät (40) gemäß Anspruch 8, wobei der Graphikprozessor (25) folgende Merkmale aufweist:
einen Bildverarbeitungsprozessor (90), der den Bildsensoreingang (10) bereitstellt und über den Bildsensoreingang (10) mit dem Bildsensor (50) verbunden ist;
eine Anzeigeansteuerung (95), die den Anzeigeausgang (15) bereitstellt und mit der berührungsempfindlichen Anzeigeeinrichtung (55) verbunden ist;
einen Videocodierer (100), der den Speicherausgang (20) bereitstellt und über den Speicherausgang (20) mit dem Festspeicher (60) verbunden ist;
eine Graphikprozessoreinheit (105), die mit dem Bildverarbeitungsprozessor (90), der Anzeigeansteuerung (95) und dem Videocodierer (100) verbunden ist,
wobei der Graphikprozessor (25) in einem integrierten Schaltkreis auf einem Halbleitersubstrat realisiert ist.

10. Mobiles Gerät (40) gemäß einem der Ansprüche 8 oder 9, wobei der Festspeicher (60) als Ringpuffer ausgebildet ist.

11. Mobiles Gerät (40) gemäß einem der Ansprüche 8 bis 10, wobei der Graphikprozessor (25) ein Standardgraphikprozessor ist, der konfiguriert ist, um in einem Bildaufnahmezyklus
die Bilddaten (65) des Bildsensors (50) mittels des Bildverarbeitungsprozessors (90) einmal in jedem Bildaufnahmezyklus zu verarbeiten;
ein erstes Einfügen der ersten Überlagerungsbilddaten (110a, 110b) in die Bilddaten (65) vorzunehmen, um den ersten prozessierten Datenstrom (30) zu erhalten, wobei der erste prozessierte Datenstrom (30) komprimiert in dem Festspeicher (60) abgelegt ist und/oder über eine Netzwerkschnittstelle (80) gestreamt ist; und
nach dem Speichern und/oder Streamen des ersten prozessierten Datenstroms (30) ein zweites Einfügen der ersten Überlagerungsbilddaten (110a, 110b) in die Bilddaten (65) vorzunehmen und ergänzend die zweiten Überlagerungsbilddaten einzufügen, um den zweiten prozessierten Datenstrom (35) zu erhalten, wobei der zweite prozessierte Datenstrom (35) unkomprimiert auf der berührungsempfindlichen Anzeigeeinrichtung (55) dargestellt ist.

12. Mobiles Gerät (40) gemäß Anspruch 11, wobei der Standardgraphikprozessor ausgebildet ist, um ein standardmäßiges Update einer Standardsoftware zu ermöglichen.

13. Verfahren zum Verarbeiten von Bildern mit folgenden Schritten:
Verbinden eines Bildsensors (50);
Verbinden einer Anzeigeeinrichtung (55);
Verbinden eines Festspeichers (60);
Einfügen von ersten Überlagerungsbilddaten (110a, 110b) durch einen Graphikprozessor (25) in Bilddaten (65), die über den Bildsensor (50) erhalten werden, um einen ersten prozessierten Datenstrom (30) zu erzeugen und Einfügen von zweiten Überlagerungsbilddaten, die sich von den ersten Überlagerungsbilddaten (30) unterscheiden, durch den Graphikprozessor (25) in die Bilddaten (65), die über den Bildsensor (50) erhalten werden, um einen zweiten prozessierten Datenstrom (35) zu erzeugen; und
Leiten des ersten prozessierten Datenstroms (30) an den Festspeicher (60) und Leiten des zweiten prozessierten Datenstroms (35) an die Anzeigeeinrichtung (55),
wobei der Graphikprozessor (25) ausgebildet ist, um den ersten prozessierten Datenstrom (30) und eine Zweitausfertigung des ersten prozessierten Datenstroms zu generieren;
wobei der Graphikprozessor (25) ausgebildet ist, um den ersten prozessierten Datenstrom (30) zu komprimieren und an den Speicherausgang (20) zu leiten;
wobei der Graphikprozessor (25) ausgebildet ist, um in die nicht komprimierte Zweitausfertigung des ersten prozessierten Datenstroms (30) die zweiten Überlagerungsbilddaten einzufügen, um den zweiten prozessierten Datenstrom (35) zu erzeugen; und
wobei der Graphikprozessor (25) ausgebildet ist, um den zweiten prozessierten Datenstrom (35) an den Anzeigeausgang (15) zu leiten.

14. Verfahren zum Herstellen eines mobilen Gerätes (40) mit folgenden Schritten:
Bereitstellen eines Gehäuses (45);
Einbauen einer Bildverarbeitungsvorrichtung (5) gemäß einem der Ansprüche 1 - 7 in das Gehäuse (45), wobei der Graphikprozessor (25) ausgebildet ist, um den ersten prozessierten Datenstrom (30) und eine Zweitausfertigung des ersten prozessierten Datenstroms zu generieren; wobei der Graphikprozessor (25) ausgebildet ist, um den ersten prozessierten Datenstrom (30) zu komprimieren und an den Speicherausgang (20) zu leiten; wobei der Graphikprozessor (25) ausgebildet ist, um in die nicht komprimierte Zweitausfertigung des ersten prozessierten Datenstroms (30) die zweiten Überlagerungsbilddaten einzufügen, um den zweiten prozessierten Datenstrom (35) zu erzeugen; und wobei der Graphikprozessor (25) ausgebildet ist, um den zweiten prozessierten Datenstrom (35) an den Anzeigeausgang (15) zu leiten;
Verbinden eines Bildsensors (50) mit dem Bildsensoreingang (10) der Bildverarbeitungsvorrichtung (5) und Einbauen des Bildsensors (50) derart in das Gehäuse (45), dass derselbe Bilder von der Umgebung des Gehäuses (45) aufnehmen kann;
Verbinden einer berührungsempfindlichen Anzeigeeinrichtung (55) mit dem Anzeigeausgang (15) der Bildverarbeitungsvorrichtung (5) und Einbauen der berührungsempfindlichen Anzeigeeinrichtung (55) in das Gehäuse (45), wobei die berührungsempfindliche Anzeigeeinrichtung (55) den zweiten prozessierten Datenstrom (35) auf einem Außenoberflächenbereich des Gehäuses (45) anzeigt; und
Verbinden eines Festspeichers (60) mit dem Speicherausgang (20) der Bildverarbeitungsvorrichtung (5) und Einbauen des Festspeichers (60) in das Gehäuse (45), wobei der Festspeicher (60) ausgebildet ist, um den ersten prozessierten Datenstrom (30) zu speichern.

## Claims

1. Image processing apparatus (5) comprising:
an image sensor input (10) for connecting an image sensor (50);
a display output (15) for connecting display means (55);
a memory output (20) for connecting a read-only memory (60); and
a graphics processor (25) configured to insert first overlapping image data (110a, 110b) into image data (65) that can be obtained via the image sensor input (10) to generate a first processed data stream (30), and to insert second overlapping image data differing from the first overlapping image data (110a, 110b) into the image data (65) to obtain a second processed data stream (35), and to direct the first processed data stream (60) to the memory output (20) and to direct the second processed data stream (30) to the display output (15),
wherein the graphics processor (25) is configured to generate the first processed data stream (30) and a duplicate of the first processed data stream;
wherein the graphics processor (25) is configured to compress the first processed data stream (30) and to direct the same to the memory output (20);
wherein the graphics processor (25) is configured to insert the second overlapping image data into the non-compressed duplicate of the first processed data stream (30) to generate the second processed data stream (35); and
wherein the graphics processor (25) is configured to direct the second processed data stream (35) to the display output (15).

2. Image processing apparatus (5) according to claim 1,
wherein the graphics processor (25) is configured to insert the second overlapping image data representing elements for a graphical user interface (115) into the second processed data stream (35);
wherein the graphics processor (25) is configured to insert the first overlapping image data (110a, 110b) that do not include the one or several elements for the graphical user interface (115) into the first processed data stream (30); and
wherein the graphics processor (25) is configured to obtain and process a user input in response to the one or several elements for the graphical user interface (115).

3. Image processing apparatus (5) according to one of claims 1 to 2,
wherein the graphics processor (25) is configured to make a selection, by the user input, of the first overlapping image data (110a, 110b) divided into at least two components; and
wherein the graphics processor (25) is configured to insert, according to the selection, one or both components of the first overlapping image data (110a, 110b) into the first processed data stream (30).

4. Image processing apparatus (5) according to one of claims 2 or 3, wherein the graphics processor (25) is configured to change an arrangement of the second overlapping image data in the second processed data stream (35) by the user input.

5. Image processing apparatus (5) according to one of claims 2 to 4, wherein the graphics processor (25) is configured to insert an image capturing element into the graphical user interface (115), wherein the image capturing element initiates an image capturing mode of the image processing apparatus.

6. Image processing apparatus (5) according to one of the preceding claims,
wherein the image processing apparatus (5) comprises a meta data sensor input (35) for connecting a meta data sensor (70); and
wherein the graphics processor (25) is configured to insert meta data (75) of the meta data sensor (70) as first overlapping image data (110a, 110b) into the first and the second processed data stream (30, 35).

7. Image processing apparatus (5) according to one of the preceding claims, wherein the graphics processor (25) comprises a network interface (80),
wherein the network interface (80) is configured to provide third overlapping image data that are inserted into the first and/or second processed data stream (30, 35); and
wherein the network interface (80) is configured to stream the first processed data stream (30).

8. Mobile device (40), comprising:
a housing (45);
an image processing apparatus (5) according to one of claims 1 to 7 that is installed in the housing (40);
an image sensor (50) connected to the image sensor input (10) of the image processing apparatus (5), wherein the image sensor (5) is installed in the housing (45) such that the same can capture images from the environment of the housing (45);
touch-sensitive display means (55) connected to the display output (15) of the image processing apparatus (5) and installed in the housing (40) and configured to display the second processed data stream (35) on an external surface area of the housing (45); and
a read-only memory (60) connected to the memory output (20) of the image processing apparatus (5) and configured to store the first processed data stream (30), wherein the read-only memory (60) is installed in the housing (45).

9. Mobile device (40) according to claim 8, wherein the graphics processor (25) comprises:
an image processing processor (90) providing the image sensor input (10) and connected to the image sensor (50) via the image sensor input (10);
a display control (95) providing the display output (55) and connected to the touch-sensitive display means (55);
a video encoder (100) providing the memory output (20) and connected to the read-only memory (60) via the memory output (20);
a graphics processor unit (105) connected to the image processing processor (90), the display controller (95) and the video encoder (100),
wherein the graphics processor (25) is realized in an integrated circuit on a semiconductor substrate.

10. Mobile device (40) according to one of claims 8 or 9, wherein the read-only memory (60) is configured as ring buffer.

11. Mobile device (40) according to one of claims 8 to 10, wherein the graphics processor (25) is a standard graphics processor that is configured to perform the following steps in an image capturing cycle:
processing the image data (65) of the image sensor (50) by means of the image processing processor (90) once in each image capturing cycle;
performing a first insertion of the first overlapping image data (110a, 110b) into the image data (65) to obtain the first processed data stream (30), wherein the first processed data stream (30) is stored in the read-only memory (60) in a compressed manner and/or streamed via a network interface (80); and
after storing and/or streaming the first processing data stream (30) performing a second insertion of the first overlapping image data (110a, 110b) into the image data (65) and additionally inserting the second overlapping image data to obtain the second processed data stream (35), wherein the second processed data stream (35) is displayed on the touch-sensitive display means (55) in an uncompressed manner.

12. Mobile device (40) according to claim 11, wherein the standard graphics processor is configured to enable a standard update of a standard software.

13. Method for processing images, comprising:
connecting an image sensor (50);
connecting display means (55);
connecting a read-only memory (60);
inserting first overlapping image data (110a, 110b) by a graphics processor (25) into image data (65) obtained via the image sensor (50) to generate a first processed data stream (30), and inserting second overlapping image data differing from the first overlapping image data (30) by the graphics processor (25) into the image data (65) obtained via the image sensor (50) to generate a second processed data stream (35); and
directing the first processed data stream (30) to the read-only memory (60) and directing the second processed data stream (35) to the display means (55),
wherein the graphics processor (25) is configured to generate the first processed data stream (30) and a duplicate of the first processed data stream;
wherein the graphics processor (25) is configured to compress the first processed data stream (30) and to direct the same to the memory output (20);
wherein the graphics processor (25) is configured to insert the second overlapping image data into the non-compressed duplicate of the first processed data stream (30) to generate the second processed data stream (35); and
wherein the graphics processor (25) is configured to direct the second processed data stream (35) to the display output (15).

14. Method for producing a mobile device (40), comprising:
providing a housing (45);
installing an image processing apparatus (5) according to one of claims 1 to 7 into the housing (45), wherein the graphics processor (25) is configured to generate the first processed data stream (30) and a duplicate of the first processed data stream; wherein the graphics processor (25) is configured to compress the first processed data stream (30) and to direct the same to the memory output (20); wherein the graphics processor (25) is configured to insert the second overlapping image data into the non-compressed duplicate of the first processed data stream (30) to generate the second processed data stream (35); and wherein the grpahics processor (25) is configured to direct the second processed data stream (35) to the display output (15);
connecting an image sensor (50) to the image sensor input (10) of the image processing apparatus (5) and installing the image sensor (50) into the housing (45) such that the same can capture images from the environment of the housing (45);
connecting touch-sensitive display means (55) to the display output (15) of the image processing apparatus (5) and installing the touch-sensitive display means (55) into the housing (45), wherein the touch-sensitive display means (55) displays the second processed data stream (35) on an external surface area of the housing (45); and
connecting a read-only memory (60) to the memory output (20) of the image processing apparatus (5) and installing the read-only memory (60) into the housing (45), wherein the read-only memory (60) is configured to store the first processed data stream (30).

## Revendications

1. Dispositif de traitement d'image (5), aux caractéristiques suivantes:
une entrée de capteur d'image (10) destinée à connecter un capteur d'image (50);
une sortie d'affichage (15) destinée à connecter un moyen d'affichage (55);
une sortie de mémoire (20) destinée à connecter une mémoire morte (60); et
un processeur graphique (25) qui est conçu pour insérer, dans les données d'image (65) qui peuvent être obtenues à travers l'entrée de capteur d'image (10), des premières données d'image de superposition (110a, 110b) pour générer un premier flux de données traité (30), et pour insérer, dans les données d'image (65), des deuxièmes données d'image de superposition, qui diffèrent des premières données d'image de superposition (110a, 110b), pour obtenir un deuxième flux de données traité (35) et pour diriger le premier flux de données traité (60) vers la sortie de mémoire (20) et pour diriger le deuxième flux de données traité (30) vers la sortie d'affichage (15),
dans lequel le processeur graphique (25) est conçu pour générer le premier flux de données traité (30) et un deuxième exemplaire du premier flux de données traité;
dans lequel le processeur graphique (25) est conçu pour comprimer le premier flux de données traité (30) et pour le diriger vers la sortie de mémoire (20);
dans lequel le processeur graphique (25) est conçu pour insérer,
dans le deuxième exemplaire non comprimé du premier flux de données traité (30), les deuxièmes données d'image de superposition pour générer le deuxième flux de données traité (35); et
dans lequel le processeur graphique (25) est conçu pour diriger le deuxième flux de données traité (35) vers la sortie d'affichage (15).

2. Dispositif de traitement d'images (5) selon la revendication 1,
dans lequel le processeur graphique (25) est conçu pour insérer, dans le deuxième flux de données traité (35), les deuxièmes données d'image de superposition qui représentent des éléments pour une interface d'utilisateur graphique (115);
dans lequel le processeur graphique (25) est conçu pour insérer, dans le premier flux de données traité (30), les premières données d'image de superposition (110a, 110b) qui ne comportent pas les un ou plusieurs éléments pour l'interface d'utilisateur graphique (115); et
dans lequel le processeur graphique (25) est conçu pour obtenir ou pour traiter une entrée d'utilisateur comme réaction aux un ou plusieurs éléments pour l'interface d'utilisateur graphique (115).

3. Dispositif de traitement d'image (5) selon l'une des revendications 1 à 2,
dans lequel le processeur graphique (25) est conçu pour effectuer par l'entrée d'utilisateur une sélection des premières données d'image de superposition (110a, 110b) divisées en au moins deux composants; et
dans lequel le processeur graphique (25) est conçu pour insérer, selon la sélection, un ou les deux composants des premières données d'image de superposition (110a, 110b) dans le premier flux de données traité (30).

4. Dispositif de traitement d'image (5) selon l'une des revendications 2 ou 3, dans lequel le processeur graphique (25) est conçu pour modifier, par l'entrée d'utilisateur, une disposition des deuxièmes données d'image de superposition dans le deuxième flux de données traité (35).

5. Dispositif de traitement d'image (5) selon l'une des revendications 2 à 4, dans lequel le processeur graphique (25) est conçu pour insérer un élément de capture d'images dans l'interface d'utilisateur graphique (115), dans lequel l'élément de capture d'images commence un mode de capture d'images du dispositif de traitement d'image.

6. Dispositif de traitement d'image (5) selon l'une des revendications précédentes,
dans lequel le dispositif de traitement d'image (5) présente une entrée de capteur de métadonnées (37) destinée à connecter un capteur de métadonnées (70); et
dans lequel le processeur graphique (25) est conçu pour insérer des métadonnées (75) du capteur de métadonnées (70) comme premières données d'image de superposition (110a, 110b) dans le premier et le deuxième flux de données traités (30, 35).

7. Dispositif de traitement d'image (5) selon l'une des revendications précédentes, dans lequel le processeur graphique (25) présente une interface de réseau (80),
dans lequel l'interface de réseau (80) est conçue pour mettre à disposition des troisièmes données d'image de superposition qui sont insérées dans le premier et/ou le deuxième flux de données traités (30, 35); et
dans lequel l'interface de réseau (80) est conçue pour diffuser le premier flux de données traité (30).

8. Appareil mobile (40), aux caractéristiques suivantes:
un boîtier (45);
un dispositif de traitement d'image (5) selon l'une des revendications 1 à 7 qui est installé dans le boîtier (40);
un capteur d'image (50) qui est connecté à l'entrée de capteur d'image (10) du dispositif de traitement d'image (5), où le capteur d'image (50) est installé dans le boîtier (45) de sorte qu'il puisse effectuer des captures d'images de l'environnement du boîtier (45);
un moyen d'affichage tactile (55) qui est connecté à la sortie d'affichage (15) du dispositif de traitement d'image (5) et est installé dans le boîtier (40) et est conçu pour afficher le deuxième flux de données traité (35) sur une zone de surface extérieure du boîtier (45); et
une mémoire morte (60) qui est connectée à la sortie de mémoire (20) du dispositif de traitement d'image (5) et est conçue pour mémoriser le premier flux de données traité (30), où la mémoire morte (60) est installée dans le boîtier (45).

9. Appareil mobile (40) selon la revendication 8, dans lequel le processeur graphique (25) présente les caractéristiques suivantes:
un processeur de traitement d'image (90) qui met à disposition l'entrée de capteur d'image (10) et est connecté, par l'intermédiaire de l'entrée de capteur d'image (10), au capteur d'image (50);
une commande d'affichage (95) qui met à disposition la sortie d'affichage (15) et est connectée au moyen d'affichage tactile (55);
un codeur vidéo (100) qui met à disposition la sortie de mémoire (20) et est connecté, par l'intermédiaire de la sortie de mémoire (20), à la mémoire morte (60);
une unité de processeur graphique (105) qui est connectée au processeur de traitement d'image (90), à la commande d'affichage (95) et au codeur vidéo (100),
dans lequel le processeur graphique (25) est réalisé dans un circuit intégré sur un substrat semi-conducteur.

10. Appareil mobile (40) selon l'une des revendications 8 ou 9, dans lequel la mémoire morte (60) est conçue comme un tampon circulaire.

11. Appareil mobile (40) selon l'une des revendications 8 à 10, dans lequel le processeur graphique (25) est un processeur graphique standard qui est configuré pour, dans un cycle de capture d'images,
traiter les données d'image (65) du capteur d'image (50) au moyen du processeur de traitement d'image (90) une fois dans chaque cycle de capture d'images;
procéder à une première insertion des premières données d'image de superposition (110a, 110b) dans les données d'image (65) pour obtenir le premier flux de données traité (30), où le premier flux de données traité (30) est sauvegardé de manière comprimée dans la mémoire morte (60) et/ou est diffusé par l'intermédiaire d'une interface de réseau (80); et
après la mémorisation et/ou la diffusion du premier flux de données traité (30), procéder à une deuxième insertion des premières données d'image superposées (110a, 110b) dans les données d'image (65) et insérer en outre les deuxièmes données d'image superposées pour obtenir le deuxième flux de données traité (35), où le deuxième flux de données traité (35) est représenté de manière non comprimée sur le moyen d'affichage tactile (55).

12. Appareil mobile (40) selon la revendication 11, dans lequel le processeur graphique standard est conçu pour permettre une mise à jour standard d'un logiciel standard.

13. Procédé de traitement d'images, aux étapes suivantes consistant à:
connecter un capteur d'image (50);
connecter un moyen d'affichage (55);
connecter une mémoire morte (60);
insérer des premières données d'image de superposition (110a, 110b) par un processeur graphique (25) dans les données d'image (65) qui sont obtenues par l'intermédiaire du capteur d'image (50), pour générer un premier flux de données traité (30) et insérer des deuxièmes données d'image de superposition, qui diffèrent des premières données d'image de superposition (30), par le processeur graphique (25) dans les données d'image (65) qui sont obtenues par l'intermédiaire du capteur d'image (50), pour générer un deuxième flux de données traité (35); et
diriger le premier flux de données traité (30) vers la mémoire morte (60) et diriger le deuxième flux de données traité (35) vers le moyen d'affichage (55),
dans lequel le processeur graphique (25) est conçu pour générer le premier flux de données traité (30) et un deuxième exemplaire du premier flux de données traité;
dans lequel le processeur graphique (25) est conçu pour comprimer le premier flux de données traité (30) et pour le diriger vers la sortie de mémoire (20);
dans lequel le processeur graphique (25) est configuré pour insérer, dans le deuxième exemplaire non comprimé du premier flux de données traité (30), les deuxièmes données d'image de superposition pour générer le deuxième flux de données traité (35); et
dans lequel le processeur graphique (25) est conçu pour diriger le deuxième flux de données traité (35) vers la sortie d'affichage (15).

14. Procédé de fabrication d'un appareil mobile (40), aux étapes suivantes consistant à:
prévoir un boîtier (45);
installer un dispositif de traitement d'image (5) selon l'une des revendications 1 à 7 dans le boîtier (45), où le processeur graphique (25) est configuré pour générer le premier flux de données traité (30) et un deuxième exemplaire du premier flux de données traité; où le processeur graphique (25) est conçu pour comprimer le premier flux de données traité (30) et pour le diriger vers la sortie de mémoire (20); où le processeur graphique (25) est conçu pour insérer, dans le deuxième exemplaire non comprimé du premier flux de données traité (30), les deuxièmes données d'image de superposition pour générer le deuxième flux de données traité (35); et où le processeur graphique (25) est conçu pour diriger le deuxième flux de données traité (35) vers la sortie d'affichage (15);
connecter un capteur d'image (50) à l'entrée de capteur d'image (10) du dispositif de traitement d'image (5) et installer le capteur d'image (50) dans le boîtier (45) de sorte qu'il puisse capturer des images de l'environnement du boîtier (45);
connecter un moyen d'affichage tactile (55) à la sortie d'affichage (15) du dispositif de traitement d'image (5) et installer le moyen d'affichage tactile (55) dans le boîtier (45), où le moyen d'affichage tactile (55) affiche le deuxième flux de données traité (35) sur une zone de surface extérieure du boîtier (45); et
connecter une mémoire morte (60) à la sortie de mémoire (20) du dispositif de traitement d'image (5) et installer la mémoire morte (60) dans le boîtier (45), où la mémoire morte (60) est conçue pour mémoriser le premier flux de données traité (30).
